Europäisches Patentamt

European Patent Office

Office européen des brevets

(19)

(11) EP 0 720 384 B1

(12) **EUROPEAN PATENT SPECIFICATION**

(45) Date of publication and mention
of the grant of the patent:
**27.10.1999 Bulletin 1999/43**

(51) Int Cl.$^6$: **H04N 7/36**

(21) Application number: **94120954.6**

(22) Date of filing: **30.12.1994**

(54) **Block matching motion estimation apparatus employing a weight function**

Blockübereinstimmungsbewegungsauswertung mit einer gewichteten Funktion

Estimation de mouvement avec correspondance de bloc employant une fonction de pondération

(84) Designated Contracting States:
**DE FR GB NL**

(43) Date of publication of application:
**03.07.1996 Bulletin 1996/27**

(73) Proprietor: **DAEWOO ELECTRONICS CO., LTD
Jung-Gu, Seoul 100-095 (KR)**

(72) Inventor: **Jung, Hae-Mook
Mapo-ku, Seoul (KR)**

(74) Representative: **Turi, Michael, Dipl.-Phys. et al
Samson & Partner
Widenmayerstrasse 5
80538 München (DE)**

(56) References cited:
**EP-A- 0 481 421          EP-A- 0 542 153
EP-A- 0 609 022          US-A- 5 301 019**

• **PATENT ABSTRACTS OF JAPAN vol. 16 no. 79
(E-1171) ,26 February 1992 & JP-A-03 266580
(NEC CORP. ET AL.) 27 November 1991,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### Field of the Invention

The present invention relates to a motion estimation apparatus for use in an image signal encoding system; and, more particularly, to a motion estimation apparatus for detecting a motion vector employing a weight function.

### Description of the Prior Art

When an image signal comprising a sequence of image "frames" is expressed in a digital form, substantial amounts of data are generated for transmission, especially in the case of a high definition television system. Since, however, the available frequency bandwidth of a conventional transmission channel is limited, in order to transmit the substantial amounts of digital data through the limited channel bandwidth, it is inevitable to compress or reduce the volume of the transmission data. Among various video compression techniques, a motion compensated interframe coding technique, which utilizes temporal redundancies of the video signals between two adjacent video frames for the compression of the signals, is known to be one of the effective compression techniques.

In the motion compensated interframe coding scheme, current frame data is predicted from previous frame data based on an estimation of the motion between the current and the previous frames. Such estimated motion may be described in terms of two dimensional motion vectors representing the displacement of pixels between the previous and the current frames.

The document EP-A-481 421 discloses a motion vector processing device comprising means for providing a set of motion vectors for a representative pixels included in the current frame together with a corresponding set of error functions. The device further comprises means for weighting each error function with a gradient function calculated for pixels around the representative pixel. Finally, the device identifies motion vector out of the set of motion vectors which correspond to the minimum weighted error function.

One of the motion vector estimation schemes which have been proposed in the art is the block matching algorithm. According to the block matching algorithm, a current frame is divided into a plurality of equal-sized search blocks. The size of a search block typically ranges between 8x8 and 32x32 pixels. To determine a motion vector for a search block in the current frame, a similarity calculation is performed between the search block of the current frame and each of a multiplicity of equal-sized candidate blocks included in a generally larger search region within a previous frame. An error function employing the MSE (mean square error) is used to carry out the similarity measurement between the search block of the current frame and each of the candidate blocks in the search region. The error function may be expressed as follows.

$$MSE = \frac{1}{H \times V} \sum_{i=1}^{H} \sum_{j=1}^{V} (I(i,j) - P(i,j))^2$$

wherein H x V represents the size of a search block; $I(i,j)$ represents a luminance level of a pixel at a coordinate $(i,j)$ in the search block; and $P(i,j)$ represents a luminance level of a pixel at the coordinate $(i,j)$ in a candidate block.

And a motion vector, by definition, represents the displacement between the search block and a candidate block which yields a minimum error function. The motion vector is then used in a receiver to construct a picture from a previous frame on a block-by-block basis.

Such a motion compensated interframe coding scheme, however, does not take into account the continuity between adjacent blocks due to the use of the error function representing the correlation between blocks. Consequently, the block boundaries may become visible because the boundaries are straight lines and highly structured and the discontinuities are particularly noticeable to the human observer. Such blocking effect occurring at the boundaries between adjacent blocks in a motion compensation process and the block structure artifacts caused by the blocking effect tends to deteriorate the quality of the coded image.

### Summary of the Invention

It is, therefore, an object of the invention to provide an improved motion estimation apparatus capable of reducing the blocking effect.

It is another object of the invention to provide an improved motion estimation apparatus for detecting a motion vector maintaining the continuity of boundary areas between adjacent blocks.

The invention achieves this object with the subject-matter of claim 1. Summarizing, there is provided an apparatus which estimates a displacement of a search block in a current frame with respect to a plurality of candidate blocks in a previous frame to produce motion vectors and error functions representing the similarity between the search block and each candidate block. The motion estimating apparatus employs a weight function to weight a number of error functions based on the local variances for localized subblocks consisting of internal pixels of the search block, selects a weighted error function entailing a minimum error and selects as an output motion vector, a motion vector corresponding to the identified weighted error function.

Brief Description of the Drawings

The above and other objects and features of the present invention will become apparent from the following description of preferred embodiments given in conjunction with the accompanying drawings, in which:

FIG. 1 shows a schematic block diagram of a block matching motion estimation apparatus employing a weight function in accordance with the invention;
FIG. 2 illustrates an exemplary block matching process between a search block having a localized subblock therein and a large search region of the previous frame.

Detailed Description of the Preferred Embodiments

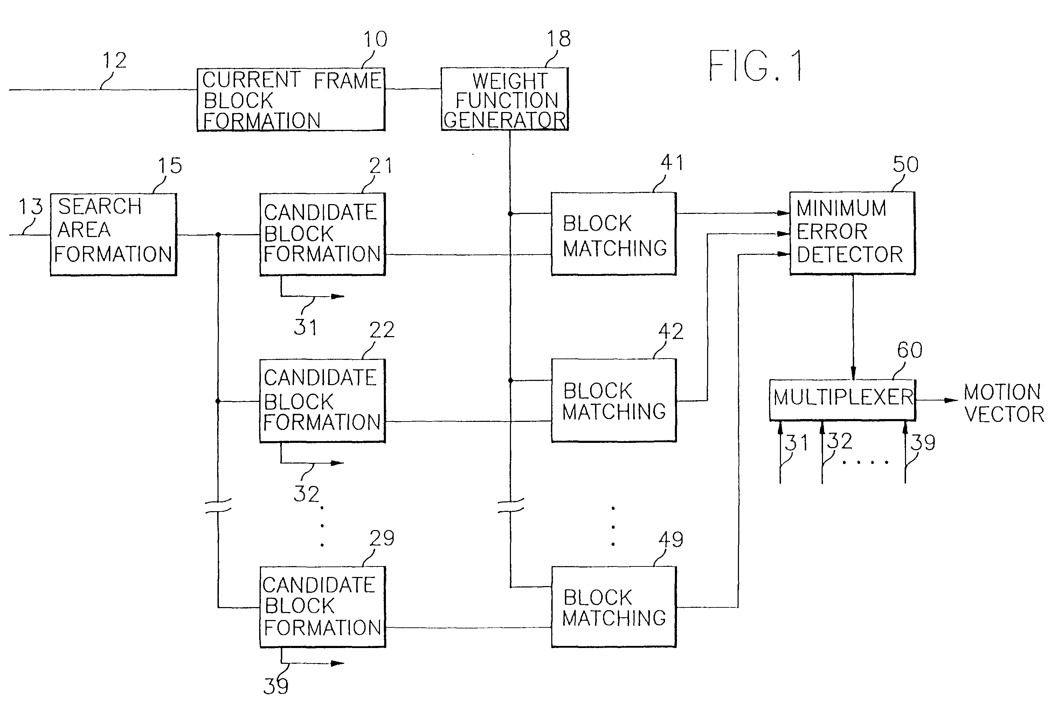

Referring to FIG. 1, there is shown a preferred embodiment of a block matching motion estimation apparatus incorporated in a motion estimation and compensation system which is used to achieve a significant data compression by removing the redundancies between successive frames, i.e., a current frame and its adjacent or previous frame. That is to say, there may be differences between the current frame and the previous frame, induced by a displacement or motion of an object; however, such differences may be confined to a relatively small region within a frame. Therefore, it is not necessary to transmit the entire image data of a current frame to a receiver (not shown). Instead, it may suffice to transmit the displacement information, i.e., motion vectors. The receiver then reconstructs the current frame from its previous frame whose image data is stored in a frame memory within the receiver, utilizing the motion vectors.

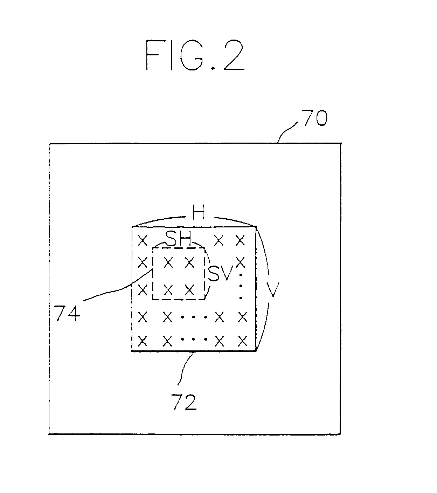

As shown, the current frame signal is provided through a line 12 to a current frame formation section 10. The current frame formation section 10 serves to divide the current frame 70 into a plurality of search blocks of an identical size, each comprising H x V pixels. For the purpose of illustration, it is assumed that H and V are both an equal number of 16 for each search block of pixels in the current frame 70. Each of the search blocks in sequence is applied to a weight function generator 18 for generating a weight function. The weight function generator 18 defines a localized subblock within a search block, wherein the search block, as shown in FIG. 2, generally depicted with a reference numeral 72, has edge pixels extending along with-the edges thereof and internal pixels, excepting the edge pixels, out of the edges, forming a localized subblock 74. And then, a local variance for the localized subblock 74 is derived as the weight function.

The local variance is derived as follows:

$$var(i,j) = \frac{1}{SH \times SV} \sum_{k=1}^{SH} \sum_{l=1}^{SV} (I(k,l) - mean)^2$$

wherein var(i,j) represents the local variance of a pixel at a coordinate (i, j) in the search block; SH x SV is the size of a localized subblock; I(k,l) is a luminance level at the pixel coordinate (k, l) in the localized subblock; and "mean" represents the mean luminance level for internal pixels within the localized subblock.

The mean luminance level is defined as follows:

$$mean = \frac{1}{SH \times SV} \sum_{k=1}^{SH} \sum_{l=1}^{SV} I(k,l)$$

The weight function is then provided to a number of block matching sections, only three 41, 42 and 49 of which are exemplarily shown therein.

Meanwhile, the previous frame stored in a memory (not shown) is fed through a line 13 to a search area formation section 15. The search area formation section 15 defines a generally large search region of the previous frame with an equal size, shape and search pattern, whereby the search or comparison will be carried out.

After the search region is determined at the search area formation section 15, the search region data is also applied to a number of candidate block formation sections, only three 21, 22 and 29 of which are illustratively shown therein. At each candidate block formation section, a candidate block of pixels is generated from the search region as the search block sweeps through the search region starting at the upper leftmost position moving horizontally one pixel position at a time, and then vertically down through the search region moving one scan line at a time, until finally reaching the lower right-most position within the search region. All the possible candidate blocks with the size of H x V pixels are formed within the determined search region. And then, the relative displacement between each candidate block and the search block of the current frame is derived and then provided to a multiplexer 60 through lines 31 to 39 as a motion vector of that candidate block. The pixel data of each candidate block is also provided from each of the candidate block formation sections 21 to 29 to each of the block matching sections 41 to 49. At each of the block matching sections 41 to 49, an error function employing a MSE measurement is calculated, using the weight function, between the search block from the current frame block formation section 20 and the candidate block from each of the candidate block formation sections 21 to 29. Conventionally, comparison of luminance level or light intensity is performed between corresponding pixels in the search block and the candidate block to yield the error function for that candidate block. The error function indicates the degree of similarity between the search block and the selected candidate block.

In accordance with the present invention, at each of the block matching sections 41 to 49, the weight function derived from the weight function generator 18 is weighted to the error function in order to detect a motion vector which entails a smooth continuity of adjacent blocks to be reconstructed.

The weighted error function "W-MSE" is defined as follows:

$$W\text{-}MSE = \frac{1}{H \times V} \sum_{i=1}^{H} \sum_{j=1}^{V} (I(i,j) - P(i,j))^2 \times var(i,j)$$

wherein H x V is the size of a search block; I(i,j) is a luminance level at a pixel coordinate (i,j) in the search block; and P(i,j) is a luminance level at the a pixel coordinate (i,j) in a candidate block.

All the weighted error functions from the block matching sections 41 to 49 are supplied to a minimum error detector 50. The minimum error detector 50 compares the weighted error functions to select a weighted error function which has a smallest error.

The minimum error detector 50 outputs a selection signal which indicates the block corresponding to the minimum error function to the motion vector selector 60. The motion vector selector 60, which is of a conventional multiplexer, in response to the selection signal, chooses the displacement vector of the candidate block, which corresponds to the minimum error function. As described above, if a candidate block has the minimum error function, that candidate block will be most similar to the search block; consequently, the displacement vector of the candidate block will be chosen as the motion vector.

While the present invention has been shown and described with reference to a particular embodiment, it will be apparent to those skilled in the art that many changes and modifications may be made without departing from the scope of the invention as defined in the appended claims.

## Claims

1. An apparatus for detecting motion vectors between a current frame (70) and a previous frame of video signals employing a block matching motion estimation technique, wherein the current frame (70) is divided into a plurality of search blocks (72) of an identical size and a search region is determined in the previous frame (70), the search region being further divided into a multiplicity of candidate blocks of said identical size, which comprises:

   means (21-29, 41-49) for motion-estimating a search block (72) with respect to each of the candidate blocks to produce motion vectors and error functions corresponding thereto, each of the motion vectors representing the displacement of pixels between a search block (72) and one of the candidate blocks;

means (10) for defining localized subblocks (74) in a search block (72) and for calculating a local variance for each of the localized subblocks (74) to thereby provide local variances of the localized subblocks (74) as a weight function, whereby the localized subblocks (74) are consisting of internal pixels of the search block (72);

means (18) for weighting each of the error functions with the weight function to produce weighted error functions; and

means (50) for identifying a weighted error function entailing a minimum error and selecting, as an output motion vector, a motion vector corresponding to the identified weighted error function.

2. The apparatus of claim 1, wherein the local variance is defined as follows:

$$var(i,j) = \frac{1}{SH \times SV} \sum_{k=1}^{SH} \sum_{l=1}^{SV} (I(k,l) - mean)^2$$

wherein var(i,j) represents the local variance of a pixel at a coordinate (i,j) in a search block; SH x SV is the size of a localized subblock; I(k,l) is a luminance level at the pixel coordinate (k,l) in the localized subblock; and said mean represents the mean luminance level for the internal pixels in the localized subblock.

3. The apparatus of claim 2, wherein the mean luminance level is defined as follows:

$$mean = \frac{1}{SH \times SV} \sum_{k=1}^{SH} \sum_{l=1}^{SV} I(k,l)$$

4. The apparatus of claim 3, wherein the weighted error function is calculated as follows:

$$W\text{-}MSE = \frac{1}{H \times V} \sum_{i=1}^{H} \sum_{j=1}^{V} (I(i,j) - P(i,j))^2 \times var(i,j)$$

wherein W-MSE is a weighted error function; H x V is the size of a search block; I(i,j) is a luminance level at a pixel coordinate (i,j) in the search block; and P(i,j) is a luminance level at the pixel coordinate (i,j) in a candidate block.

**Patentansprüche**

1. Vorrichtung zum Bestimmen von Bewegungsvektoren zwischen einem aktuellen Frame (70) und einem vorhergehenden Frame von Videosignalen, welche eine Blockvergleichs-Bewegungsabschätztechnik anwendet, wobei der aktuelle Frame (70) in mehrere Suchblöcke (72) identischer Größe aufgeteilt wird und ein Suchbereich in dem vorhergehenden Frame (70) bestimmt wird, wobei der Suchbereich ferner in mehrere in Frage kommende Blöcke von dieser identischen Größe aufgeteilt wird, wobei die Vorrichtung umfaßt:

Mittel (21-29, 41-49) für die Bewegungsabschätzung eines Suchblockes (72) bzgl. jedes der in Frage kommenden Blöcke, um Bewegungsvektoren und hierzu entsprechende Fehlerfunktionen zu erzeugen, wobei jeder der Bewegungsvektoren die Verschiebung von Pixeln zwischen einem Suchblock (72) und einem der in Frage kommenden Blöcke darstellt;

Mittel (10) zum Definieren lokalisierter Subblöcke (74) in einem Suchblock (72) und zum Berechnen einer lokalen Varianz für jeden der lokalisierten Subblökke (74), um dadurch lokale Varianzen der lokalisierten Subblöcke (74) als eine Gewichtungsfunktion bereitzustellen, wobei die lokalisierten Subblöcke (74) aus internen Pixeln des Suchblockes (72) bestehen;

Mittel (18) zum Gewichten jeder der Fehlerfunktionen mit der Gewichtungsfunktion, um gewichtete Fehlerfunktionen zu erzeugen; und

Mittel (50) zum Identifizieren einer gewichteten Fehlerfunktion, die einen minimalen Fehler ergibt, und zum Auswählen eines der identifizierten gewichteten Fehlerfunktion entsprechenden Bewegungsvektor als ein Ausgangsbewegungsvektor.

2. Vorrichtung nach Anspruch 1, bei welcher die lokale Varianz wie folgt definiert ist:

$$var(i,j) = \frac{1}{SH \times SV} \sum_{k=1}^{SH} \sum_{l=1}^{SV} (I(k,l) - \text{Mittelwert})^2$$

wobei var(i, j) die lokale Varianz eines Pixels bei einer Koordinate (i, j) in einem Suchblock darstellt; SH x SV die Größe eines lokalisierten Suchblockes ist; I(k, l) ein Luminanzpegel bei der Pixelkoordinate (k, l) in dem lokalisierten Subblock ist; und der Mittelwert den mittleren Luminanzpegel für die interne Pixel in dem lokalisierten Subblock darstellt.

3. Vorrichtung nach Anspruch 2, bei welcher der mittlere Luminanzpegel wie folgt definiert ist:

$$\text{Mittelwert} = \frac{1}{SH \times SV} \sum_{k=1}^{SH} \sum_{l=1}^{SV} I(k,l)$$

4. Vorrichtung nach Anspruch 3, bei welcher die gewichtete Fehlerfunktion wie folgt berechnet wird:

$$W\text{-}MSE = \frac{1}{H \times V} \sum_{i=1}^{H} \sum_{j=1}^{V} (I(i,j) - P(i,j))^2 \times var(i,j)$$

wobei W-MSE eine gewichtete Fehlerfunktion ist; H x V die Größe eines Suchblockes ist; I(i, j) ein Luminanzpegel bei einer Pixelkoordinate (i, j) in dem Suchblock ist; und P(i, j) ein Luminanzpegel bei der Pixelkoordinate (i, j) in einem in Frage kommenden Block ist.

**Revendications**

1. Dispositif pour détecter des vecteurs de mouvement entre une trame courante (70) et une trame précédente de signaux vidéo utilisant une technique d'estimation de mouvement avec correspondance de bloc, dans lequel la trame courante (70) est divisée en une pluralité de blocs de recherche (72) d'une taille identique et une région de recherche est déterminée dans la trame précédente (70), la région de recherche étant en outre divisée en une multiplicité de blocs candidats de ladite taille identique, comprenant :

des moyens (21-29, 41-49) pour estimation de mouvement d'un bloc de recherche (72) par rapport à chacun des blocs candidats pour produire des vecteurs de mouvement et des fonctions d'erreur correspondant à celui-ci, chacun des vecteurs de mouvement représentant le déplacement de pixels entre un bloc de recherche (72) et l'un des blocs candidats;

des moyens (10) pour définir des blocs secondaires localisés (74) dans un bloc de recherche (72) en pour calculer une variance locale pour chacun des blocs secondaires localisés (74) pour fournir ainsi des variantes locales des blocs secondaires localisés (74) sous la forme d'une fonction de pondération de façon que les blocs secondaires localisés (74) soient constitués de pixels internes du bloc de recherche (72) ;

des moyens (18) pour pondérer chacune des fonctions d'erreur avec la fonction de poids pour produire des fonctions d'erreur pondérées ; et

des moyens (50) pour identifier une fonction d'erreur pondérée entraînant une erreur minimale et sélectionner, en tant que vecteur de mouvement de sortie, un vecteur de mouvement correspondant à la fonction d'erreur pondérée identifiée.

2. Dispositif selon la revendication 1, dans lequel la variance locale est définie comme suit :

$$\mathrm{var}(i,j) = \frac{1}{SH \times SV} \sum_{k=1}^{SH} \sum_{l=1}^{SV} (I(k,l) - mean)^2$$

où var(i,j) représente la variance locale d'un pixel pour une coordonnée (i, j) dans un bloc de recherche ; SH x SV est la taille d'un bloc secondaire localisé ; I(k, l) est un niveau de luminance pour la coordonnée de pixel (k, l) dans le bloc secondaire localisé ; et ledit mean représente le niveau de luminance moyen pour les pixels internes dans le bloc secondaire localisé.

3. Dispositif selon la revendication 2, dans lequel le niveau de luminance moyen est défini comme suit :

$$\mathrm{mean} = \frac{1}{SH \times SV} \sum_{k=1}^{SH} \sum_{l=1}^{SV} I(k,l)$$

4. Dispositif selon la revendication 3, dans lequel la fonction d'erreur pondérée est calculée comme suit :

$$\mathrm{W\text{-}MSE} = \frac{1}{H \times V} \sum_{i=1}^{H} \sum_{j=1}^{V} (I(i,j) - P(i,j))^2 \times \mathrm{var}(i,j)$$

où W-MSE est une fonction d'erreur pondérée ; H x V est la taille d'un bloc de recherche ; I(i, j) est un niveau de luminance pour une coordonnée de pixel (i, j) dans le bloc de recherche ; et P(i, j) est un niveau de luminance pour la coordonnée de pixel (i, j) dans un bloc candidat.

FIG. 1

# FIG.2